# EUROPEAN PATENT APPLICATION

(11) **EP 2 065 693 A2**
(43) Date of publication of application: **03.06.2009**
(21) Application number: 08380069.8
(22) Date of filing: 07.03.2008
(51) Int. Cl.: G01M 9/08

(54) **Use of a device to join the parts of a model designed for use in tests in a wind tunnel and the corresponding device**

(30) Priority: 28.11.2007 ES 200703156
(71) Applicant: Airbus España, S.L., 28906 Getafe (Madrid) (ES)
(72) Inventor: De Pablo Pérez, Jesus, E-28050 Madrid (ES)
(74) Representative: Ungria Lopez, Javier

(57) **Abstract**

The model is designed in such a way that the parts are joined by specially adapted magnets. This adaptation involves the use of at least one shell (4) made from ferromagnetic material, open on one side, and equipped with a means of attaching itself to one of the parts to be joined (2), which will house and hold a magnet in place in its interior (5), and whose open side will be covered by another of the parts to be joined (3), to create a continuous magnetic field with closed (10) loops around the shell (14), ensuring that only the magnetised area of the other part to be joined (2) will cover the open side of the shell, creating the link between the parts. The use of the magnets optimises the time required for the assembly of the model and changes to its configuration, in order to carry out different tests, thereby increasing the productivity of the test.

## Description

### PURPOSE OF THE INVENTION

The invention is suited to use in models comprising ferromagnetic parts, and its purpose is to allow magnets to be used to join the parts of the model, thereby providing a design for the model and the magnets that allows the link to be created.

The invention also refers to a device that joins the parts of the model together using magnets.

The invention can be used in any sector of an industry where models need to be made and subjected to aerodynamic tests, particularly the aeronautics industry.

The invention considerably reduces the assembly time required for the model, by avoiding the use of nuts and bolts usually required to secure the different parts that comprise the models used to carry out tests in wind tunnels.

### BACKGROUND OF THE INVENTION

The use of aeronautic models when carrying out tests in a wind tunnel is known in the state of the art, where the models are contained in boxes, and once received the assemblers remove all of the parts and assemble it. This process depends on the type and nature of the aerodynamic test to be carried out.

When dealing with the models, the wind tunnels prove quite narrow for the assemblers, and this makes the operations to be carried out more difficult.

The test model defines a series of configurations to be tested, which, for example, are based on the different combinations of spoiler, aileron, elevator, slat and flap deflections, etc., that are to be tested. In other words, different assemblies are carried out, with the parts forming different angles to analyse the aerodynamic behaviour of the different deflections represented by the angles in question.

The parts used in the model are metallic and are held together by means of tolerances, metal pin bolts and screws.

The test is not a continuous process, in other words it is neither possible nor desirable to test all combinations of aerodynamic parts at once. When the testing of a configuration has finished and it is time to move on to the next one, the generation of air in the tunnel is stopped and the operatives enter the test section to disassemble the configurations already tested and to assemble the parts in a new configuration. This process is time-consuming, and this is exacerbated by the narrowness of the tunnel with which the assembler has to work, which reduces the productivity of the test. As a result, the test could be optimised by reducing the time spent changing the configurations, in other words reducing the dead time between one configuration and the next.

The assembly of the parts of the models also requires the bolts to remain fixed in the holes to cover their heads, so that the heads and the exit bolt hole have to be covered with a special material to respect the geometry of the aerodynamic shape that is to be tested. This material takes time to solidify and it must then be sanded to make it flush with the aerodynamic surface to be tested, in order to prevent unwanted effects on the testing. This process also generates waste that needs to be removed.

### DESCRIPTION OF THE INVENTION

In order to resolve any inconvenience caused and to achieve the objectives indicated above, the invention provides for the innovative use of a device to join the parts of a model designed for use in tests in a wind tunnel. The parts of the model are made of ferromagnetic material and designed in such a way that the parts are joined by a device consisting of at least one magnet.

To this end, the device can be adapted by incorporating a means of attaching it to one of the parts to be connected to it, including at least one magnet to connect it to one of the other parts.

As a result, the invention allows magnets to be used to join the metal parts used in the models together, something which has not been achieved to date, due to the characteristics of the models in question, such as their small size, the number of instruments fitted inside, etc., and factors inherent to the test, such as the large aerodynamic loads produced, the speed of dismantling between configurations, etc.

This innovative use of magnets has a surprising effect that had not hitherto been achieved in the state of the art, since the assembly time and the time required to change configurations in the test models used in the wind tunnel is reduced, by considerably simplifying the use of the normal pin bolts and screws. Furthermore, no waste is generated, since there is no need for the paste normally used to cover the head of the bolts, and therefore no need for sanding, which also saves a considerable amount of time.

The use of magnets in the models for wind tunnels is not therefore straightforward, but rather represents a significant technological advance.

The adaptation of the magnets consists of using at least one shell made from ferromagnetic material, open on one side, and equipped with a means of attaching itself to one of the parts to be connected. The shell also houses and holds a magnet in place in its interior, and the open side is covered by another of the parts to be connected, creating a continuous closed-loop magnetic field around the shell, ensuring that only the magnetised area of the other part to be connected covers the open side of the shell, so that when this area is positioned over the magnet, it is attracted to it and the parts are joined together.

The magnets used are high-performance, and made of materials such as neodymium iron or samarium cobalt. The properties of the magnets are far superior to those of traditional ones, and ensure a high level of coercive force and high residual magnetisation, allowing them to be used in reduced spaces. The cost of the magnets is also negligible when compared with the cost of any of the parts that make up the aerodynamic model to be tested in the tunnel.

The magnet is held in place inside the shell by means of a resin that at least partially covers the area between the magnet and the shell, more specifically, covering the area between the side walls of the shell and the magnet, so that the magnet remains embedded in the shell.

The invention also relates to the device obtained through the adaptations indicated above, characterised by the fact that the parts of the model are made of ferromagnetic material and include means of attaching the parts to one of the other parts to be connected and at least one magnet to be attached to another of the parts to be connected to the model.

The device includes at least one shell made of a ferromagnetic material, open on one side. It also includes the means of attaching one of the parts to be joined to it, which houses and holds at least one magnet in place, so that the open side is covered by another of the parts to be attached to it, achieving the magnetic field described above, in such a way that only the area of the part covering the open side of the shell is magnetised, joining both parts together.

As previously stated, the magnet is held in place inside the shell by means of a resin, which at least partially covers the area between the magnet and the shell.

The shell is machinable, and also rectifiable, to allow the precise tolerance margin required for the tunnel models to be achieved, such that a high level of precision is not required in the manufacture of the magnet, minimising the cost and, on the other hand, demonstrating the high fragility of the magnet, as compared with the shell that houses it.

The invention includes means of separating the joined parts of the model, such as mechanically regulated parts, suction vents, levers and parts that blow compressed air.

The mechanically regulated means of separating the joined parts of the model, including parts that keep the shell separate from the part to which it is to be fixed, when the parts are connected, include mechanical means of regulating the space between the shell and the part to be attached to the shell. Thus system allows the space to be modified, separating the magnet from the area of the other part that covers the open side of the shell, keeping the parts separate, and allowing them to be dismantled quickly and easily in order to change their relative positions or the angle formed by the parts, in order to carry out a new aerodynamic test, for example, while acting on the mechanical means of regulating the space between the shell and the parts to be joined to it. This configuration also allows the rapid assembly of a new position to be tested, as described above.

The means of attaching the shell to one of the parts to be connected to it consists of a threaded hole in the shell, to which a screw is attached. The screw goes through the hole and becomes lodged in the part to be connected to the shell, so that when the screw is inserted in the threaded hole, the shell is attached to the part to be connected to it. The action of the screw permits the separation of the parts.

In the preferred embodiment of the invention, both the shell and the parts to be connected to it are made of steel, allowing all of the functionalities described above to be achieved.

The invention is designed in such a way that the other part to be attached, which covers the open side of the shell, is equipped with a notch adapted to the profile of the shell, ensuring a snug fit, preventing relative slippage between the joined parts. This allows the parts to be joined with precision.

The series of figures provided below are aimed at facilitating better understanding of these technical specifications, and form an integral part hereof. They explain the purpose of the invention, and are illustrative but not exhaustive.

### BRIEF DESCRIPTION OF THE FIGURES

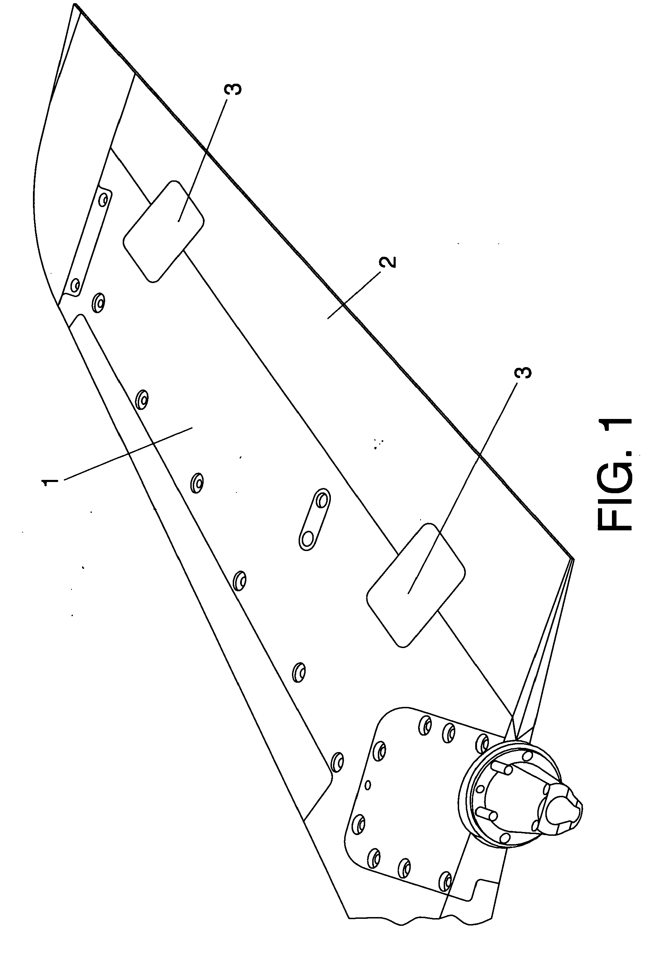

Figure 1.- Shows a perspective view of the model of the horizontal tail stabiliser to be tested in a wind tunnel together with the rest of the model, which represents the airplane. The invention is applied to the joint between the flat area of the horizontal tail stabiliser and its movable part, the lever, so that the angle of the lever in relation to the flat part of the stabiliser can be changed easily in order to carry out different tests of the deflections of the said lever.

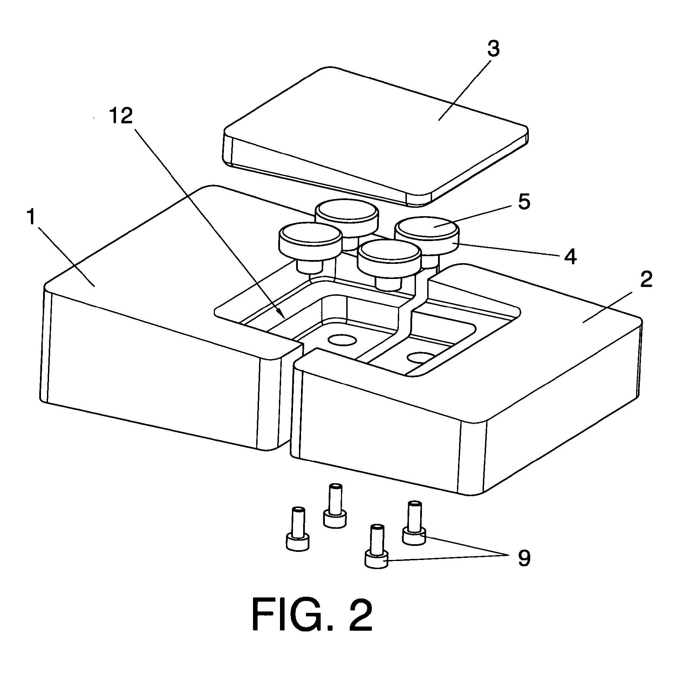

Figure 2.- Shows a partial blown-up perspective view of one of the areas to which the invention device is applied.
Figure 3.- Shows a section view of the previous figure with all of the assembled parts.

### DESCRIPTION OF THE PREFERRED EMBODIMENT FORM

A description of the invention is provided below, based on the figures discussed above.

The invention essentially involves the use of magnets to join the parts of a model designed for use in tests carried out in a wind tunnel.

The example of described embodiment refers to the use of magnets to create a joint with flat area (1) of the model for a wing and its aileron (2).

In this case, the connection between flat area 1 and the aileron or lever (2) is achieved by means of the supporting part (3), which in the embodiment example in question, uses two of these supporting parts (3) to create the connection.

The invention includes the shell (4) open on the upper side, which houses the magnet (5) by means of a resin (6) so that the magnet (5) remains embedded and fixed inside the shell (4).

The magnet (5) is made of neodymium-iron or samarium-iron.

The shell is also equipped with an extension (7), which includes a threaded hole (8) in which a screw (9) is inserted. This system will be described later.

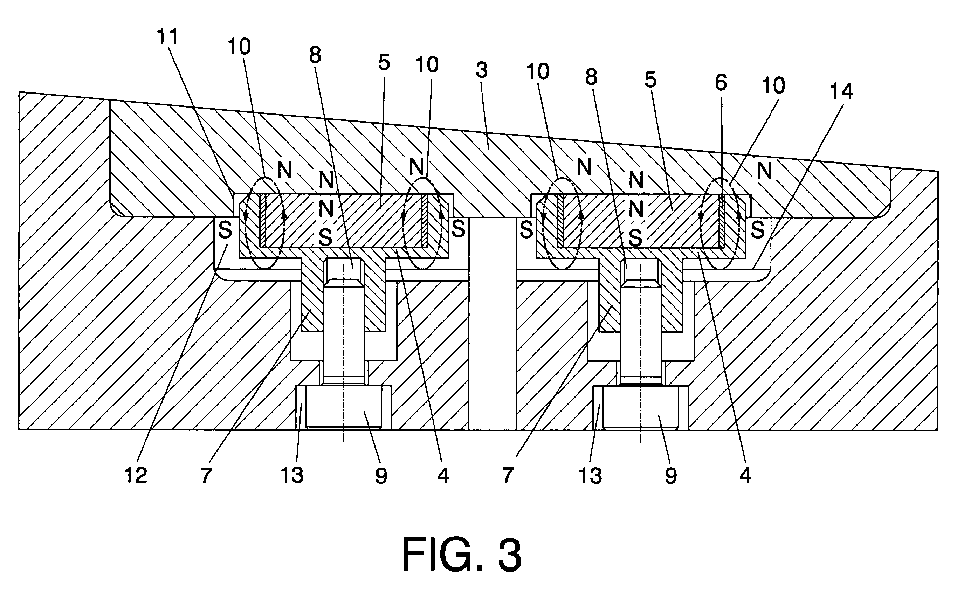

The configuration described above ensures that when the open side of the shell (4) is situated over the supporting part (3), a continuous magnetic field with closed loops (10) is formed, and the area of supporting part (3) fitted over the magnet (5) is the only part that is magnetised, meaning that the shell (4) and the magnet are perfectly connected to the supporting part (3). The distribution of the North Pole N and South Pole S is clearly indicated in figure 3. This ensures that the constant residual magnetisation in the device only has an effect on the magnetometric measuring devices, which are not used in the wind tunnel, thus ensuring that the connection created using magnets does not affect the tests carried out in the tunnel.

To ensure that the parts are joined in the right place, supporting part (3) is equipped with a notch (11) adapted to the profile of the shell (4) to ensure that it holds the magnet in place precisely.

In this specific example of embodiment, four shells (4) are used, and these are located in the corresponding notches (11) of each supporting part (3).

Once the shells (4) are fixed over the supporting part (3), and the specific configuration of parts 1 and 2, include casing (12), the supporting part (3) can be placed in such a easy that its upper surface is perfectly flush with flat area (1) and the aileron (2), in which position the extensions (7) of the shell (4) are face to face with some holes (13) made in flat area (1) and the aileron (2), so that when the screws (9) are inserted into the threaded holes (8), a connection is made between flat area (1) and the aileron (2), through supporting part (3).

The casing (12) is suitably sized so that when parts 1, 2 and 3 are connected, there is a space (14) between the bottom of the casing (12) and the lower face of the shell (4), whereby turning the screws (9) allows the shells (4) and the magnets (5) to move downwards, creating a space between them in relation to the supporting part (3). This allows parts 1, 2 and 3 to be dismantled and separated. The holes (13) are suitably configured to receive the head of the screw (9), so that it remains hidden and does not affect the aerodynamic test.

The separation (14) measures 2 mm, and this distance is sufficient to create the separation described above.

In the example of embodiment, the supporting part (3) is configured in such a way as to remain lined up with flat area (1) and the aileron (2), to allow testing to be carried out in this position. However, once the separation is achieved as described above, another connection can be made between parts 1, 2 and 3, so that the angle of the supporting part (3) is configured in such a way that the aileron (2) forms a certain angle in relation to flat area (1), obtaining a new test configuration, in a fast and simple manner, preventing long periods of dead time that would have repercussions on the cost of carrying out the tests, allowing different deflection angles of the aileron in relation to flat area (1) to be tested.

The high precision required to ensure the correct relative positions of parts 1, 2 and 3 is achieved by means of a system of tolerances, e.g. h7/g6, through the mechanisation and rectification of parts 1, 2 and 3.

The resultant force of aileron 1, when subjected to tests inside the tunnel, would be to the order of 250 Newtons, or 25 kilo force, and the force that supports each magnet is 14 kilo force, so that when two magnets (5) are provided for each of the supporting parts (3) on the aileron (2), a total of 28 kilo force is obtained, which is higher than the 25 kilo force acting on the aileron when it is tested in the wind tunnel.

In the example in question, the means of separating the parts described involved mechanically regulated parts and the action of the screw (9), however the invention also allows for the possibility of the space being created by means of suction vents, levers, devices that blow compressed air and any other conventional system that allows this function to be achieved.

## Claims

1. **USE OF A DEVICE TO JOIN THE PARTS OF A MODEL DESIGNED FOR USE IN TESTS IN A WIND TUNNEL**, **characterised in that** the parts of the model are made of ferromagnetic material and the model is designed in such a way that the parts are connected by means of a device comprising at least one magnet (5).

2. **USE OF A DEVICE TO JOIN THE PARTS OF A MODEL DESIGNED FOR USE IN TESTS IN A WIND TUNNEL**, according to claim 1, **characterised in that** it comprises to adapt said device by the inclusion of means of attaching it to one of the parts to be connected, and the inclusion of at least one magnet to join it to one of the other parts.

3. **USE OF A DEVICE TO JOIN THE PARTS OF A MODEL DESIGNED FOR USE IN TESTS IN A WIND TUNNEL,** according to claim 2, **characterised in that** the adaptation of said magnets comprises the use of at least one shell (4) made of ferromagnetic material, open on one side, and equipped with means of attaching it to one of the parts to be connected, which houses and holds a magnet (5), and whose open side is covered by another one of the parts to be connected (3), to create a continuous magnetic field with closed loops (10) around the shell (4), ensuring that only the magnetised area of the other part to be connected covers the open side of the shell, creating the link between the parts.

4. **USE OF A DEVICE TO JOIN THE PARTS OF A MODEL DESIGNED FOR USE IN TESTS IN A WIND TUNNEL,** according to claim 3, **characterised in that** said magnet (5) is held in place in the shell (4) using a resin (6) that is placed covering at least partially the area between the magnet (5) and the shell (4).

5. **DEVICE TO JOIN THE PARTS OF A MODEL DESIGNED FOR USE IN TESTS IN A WIND TUNNEL, characterised in that** the parts of the model are made of ferromagnetic material and comprise means of attaching to one of the parts to be connected and at least one magnet (5) to be attached to another one of the parts to be connected to the model.

6. **DEVICE TO JOIN THE PARTS OF A MODEL DESIGNED FOR USE IN TESTS IN A WIND TUNNEL,** according to claim 5, **characterised in that** the adaptation of the magnets comprises the use of at least one shell (4) made of ferromagnetic material, open on one side, and equipped with means of attaching it to one of the parts to be connected, which houses and holds a magnet (5), and whose open side is covered by another one of the parts to be connected (3), to create a continuous magnetic field with closed loops (10) around the shell (4), ensuring that only the magnetised area of the other part to be connected covers the open side of the shell, creating the link between the parts.

7. **DEVICE TO JOIN THE PARTS OF A MODEL DESIGNED FOR USE IN TESTS IN A WIND TUNNEL,** according to claim 6, **characterised in that** the at least one magnet (5) is held in place inside the shell (4) using a resin (6) that is placed covering at least partially the area between the magnet (5) and the shell (4).

8. **DEVICE TO JOIN THE PARTS OF A MODEL DESIGNED FOR USE IN TESTS IN A WIND TUNNEL**, according to claim 5, **characterised in that** the at least one magnet (5) is selected from the group of neodymium-iron magnet and samarium-iron magnet.

9. **DEVICE TO JOIN THE PARTS OF A MODEL DESIGNED FOR USE IN TESTS IN A WIND TUNNEL,** according to claim 6, **characterised in that** the shell (4) is selected among a machinable shell, a rectifiable shell or a combination of both.

10. **DEVICE TO JOIN THE PARTS OF A MODEL DESIGNED FOR USE IN TESTS IN A WIND TUNNEL,** according to claim 5, **characterised in that** it comprises means of separating the parts connected to the model.

11. **DEVICE TO JOIN THE PARTS OF A MODEL DESIGNED FOR USE IN TESTS IN A WIND TUNNEL,** according to claim 10, **characterised in that** the means of separating the parts connected to the model are selected form the group of mechanical means of regulation, suction vents, levers and devices that blow compressed air.

12. **DEVICE TO JOIN THE PARTS OF A MODEL DESIGNED FOR USE IN TESTS IN A WIND TUNNEL,** according to claim 11, **characterised in that** the mechanically regulated means of separating the parts connected to the model are provided at the means of attaching one of the parts to the shell, and these include means of keeping the shell (4) separate from the part to be connected to when the parts are connected, and include mechanical means of regulating the space between the shell and the aforementioned part to be connected to the said shell (4) in order to separate the magnet (5) when modifying said space in relation to the area of the other connected part that covers the open face of the shell (4), separating the parts.

13. **DEVICE TO JOIN THE PARTS OF A MODEL DESIGNED FOR USE IN TESTS IN A WIND TUNNEL,** according to claim 12, **characterised in that** the means of fixing the shell (4) to one of the parts to be connected are comprised of a threaded hole (8) made in the shell (4), in which a screw (9) is inserted and embedded in the part to be connected.

14. **DEVICE TO JOIN THE PARTS OF A MODEL DESIGNED FOR USE IN TESTS IN A WIND TUNNEL,** according to claims 5 to 13, **characterised in that** the shell (4) and the parts to be connected are made of steel.

15. **DEVICE TO JOIN THE PARTS OF A MODEL DESIGNED FOR USE IN TESTS IN A WIND TUNNEL,** according to claim 6, **characterised in that** the area of the other part to be connected that covers the open face of the shell (4) includes a notch (11), which is adapted to the surface of the shell (4), to ensure that it is precisely housed and assembled.
